# NEUE EUROPÄISCHE PATENTSCHRIFT

(11) **EP 0 978 549 B2**
(45) Veröffentlichungstag und Bekanntmachung des Hinweises auf die Entscheidung über den Einspruch: **13.08.2008**
(45) Hinweis auf die Patenterteilung: 19.05.2004
(21) Anmeldenummer: 99114734.9
(22) Anmeldetag: 28.07.1999
(51) Int. Cl.: C09D 175/04, C08G 18/08

(54) **Wasserverdünnbare Bindemittel für "Soft-Feel"-Lacke**
Water-reducible binders for soft-touch lacquers
Liants hydrodiluables pour des peintures souples au toucher

(30) Priorität: 04.08.1998 AT 134398
(43) Veröffentlichungstag der Anmeldung: 09.02.2000
(73) Patentinhaber: Cytec Surface Specialties Austria GmbH, 8402 Werndorf (AT)
(72) Erfinder: Schafheutle, Markus, Dr., 8044 Graz (AT); Anner, Birgit, 8020 Graz (AT); Arzt, Anton, 8430 Tillmitsch (AT); Burkl, Julius, 8053 Graz (AT); Petritsch, Gerlinde, 8020 Graz (AT); Wango, Jörg, 8142 Wundschuh 72 (AT)
(74) Vertreter: Deckers, Hellmuth Alexander

(56) Entgegenhaltungen:
- EP-A- 0 469 389
- EP-A- 0 496 205
- EP-A- 0 669 352
- EP-A- 0 926 172
- DE-A- 4 109 477
- US-A- 4 728 542
- US-A- 5 059 639
- DATABASE WPI Section Ch, Week 197806 Derwent Publications Ltd., London, GB; Class A25, AN 1978-11306A XP002120647 & JP 52 155627 A (SANYO KK), 24. Dezember 1977 (1977-12-24)
- VDI Berichte 1398 Tagung vom 19.-20.05.1998 "Wässrige 2K-PUR-Softfeel-Beschichtungen für die Anwendung im Autoinnenraum" S.357 C.Kobusch, J.Petzoldt, M.Bock

## Beschreibung

Bei der Lackierung harter Substrate, beispielsweise von Kunststoffen, wird es häufig gewünscht, durch die Beschichtung einen weichen "Griff" zu erreichen, wobei die Oberfläche sich zwar weich anfühlt, die mechanische und chemische Beständigkeit der so hergestellten Beschichtungen jedoch im Vergleich zu den üblichen Beschichtungen nicht verschlechtert ist.

Bindemittel für diese sogenannten "Soft-Feel"-Lacke sind vorzugsweise solche, die Segmente von Polymeren mit niedriger Glas-Übergangs-Temperatur aufweisen; die Vernetzungsdichte muß so hoch sein, daß die mechanischen und chemischen Beständigkeits-Eigenschaften sich möglichst wenig oder gar nicht verschlechtern; andererseits muß sie niedrig genug sein, um auch makroskopisch den Effekt der niedrigen Glas-Übergangs-Temperatur zur Geltung kommen zu lassen.

Als Segment mit niedriger Glas-Übergangs-Temperatur setzt man beispielsweise in Polyurethanen häufig Polyäther-Polyole oder Polyester-Polyole ein, die rein aliphatischen Charakter haben. Insbesondere bei der Anwendung als Deckbeschichtung werden generell aromatische Komponenten vermieden, die die fertige Beschichtung photochemisch empfindlich machen und zu Sekundär-Reaktionen wie Vergilbung und Versprödung führen.

EP-A-0 669 352 als nächster Stand der Technik offenbart wässrige PolyesterPolyurethan (PUR)-Dispersionen, die in Abmischung mit PUR-Dispersionen mit hydrophilen Isocyanatverbindungen vernetzt werden zu Beschichtungen mit Softfeel-Effekt.

Es hat sich nun gezeigt, daß Beschichtungen, deren Bindemittel- und Härter-Komponenten aus aliphatischen Bausteinen aufgebaut sind, insbesondere Polyurethane und Polyester aus rein aliphatischen Bausteinen, bei der Einwirkung von UV-Strahlung schnell klebrig werden und ihre mechanische Stabilität verlieren.

Es bestand daher die Aufgabe, Bindemittel für wasserverdünnbare Soft-Feel-Lacke zu finden, die stabil gegenüber der Einwirkung von UV-Licht sind. Überraschenderweise wurde gefunden, daß Kombinationen von Bindemitteln **A** und Härtern **B**, wobei mindestens eine dieser beiden Komponenten **A** und **B** aromatische Strukturelemente enthält, zu Beschichtungen mit ausgezeichneter UV-Beständigkeit führen. Dies war umso unerwarteter, als aromatische Bausteine die Licht- bzw. UV-Beständigkeit üblicherweise herabsetzen.

Gegenstand der Erfindung sind daher Bindemittel-Härter-Kombinationen für Soft-Feel-Lacke, enthaltend wasserverdünnbare Bindemittel **A**, die funktionelle Gruppen ausgewählt aus Hydroxylgruppen, Aminogruppen und Carboxylgruppen aufweisen, und Härter **B**, deren funktionelle Gruppen mit den funktionellen Gruppen der Komponente **A** reagieren können unter Ausbildung von chemischen Bindungen als Vernetzungsstellen, wobei mindestens eine der Komponenten **A** und **B** aromatische Bestandteile in einer solchen Menge enthält, daß der Massenanteil an aromatischen Strukturbausteinen in der Kombination aus Bindemittel und Härter, bezogen auf den Feststoff, mindestens 3 %, vorzugsweise mindestens 5 %, und besonders bevorzugt mindestens 10 % beträgt.

Als Bindemittel **A** eignen sich alle bekannten Klassen von Polymeren, die funktionelle Gruppen ausgewählt aus Hydroxyl-, Amino-, Amid- und Carbonsäuregruppen aufweisen. Beispielsweise sind Polyacrylat-Polyole, Polyester-Polyole, Polyäther-Polyole und Polyurethan-Polyole als Hydroxylgruppen-haltige Polymere, Polyäther-Amine und Polyiminoalkylen-Amine, Polyamidoamine und Polyurethan-Harnstoffe als Aminogruppen-haltige Polymere sowie Polyester-Polyole, Polyurethan-Polyole und Copolymere der Acryl- oder Methacrylsäure als Carboxylgruppen-haltige Polymere sowie Mischungen der genannten Polymere geeignet. Dabei beträgt die spezifische Stoffmenge an Hydroxyl-, Amino- oder Carboxylgruppen in den betreffenden Polymeren jeweils vorzugsweise 0,01 bis 2 mmol/g, und die Polymeren weisen vorzugsweise im Durchschnitt pro Molekül jeweils mindestens 1,5, bevorzugt 1,8 bis 2,5, und besonders bevorzugt 1,9 bis 2,2 funktionelle Gruppen auf.

Die Bindemittel **A** sind Kombinationen aus Hydroxylgruppen-haltigen Polyurethanen **A1** und Aminogruppen-haltigen Polyurethan-Harnstoffen **A2**. Ganz besonders bevorzugt werden zum Aufbau der Polyurethane **A1** und **A2** Polyesterpolyole eingesetzt, es lassen sich jedoch auch beispielsweise Polyäther-Polyole, Polycarbonat-Polyole, Polybutadien-Polyole, Polyisopren-Polyole oder Polyesteramid-Polyole einsetzen.

Die Hydroxylzahl dieser bevorzugten Polyester-Urethane **A1** beträgt 10 bis 60, bevorzugt 20 bis 50 und besonders bevorzugt 35 bis 45 mg/g; ihre Glas-Übergangs-Temperatur liegt bei -70 bis -30, bevorzugt -60 bis -40, und besonders bevorzugt bei -50 °C.

Die Hydroxylzahl der Polyester-Urethan-Harnstoffe **A2** beträgt vorzugsweise ca. 0 bis 10, besonders bevorzugt 0 bis 5 mg/g, ihre Aminzahl ist 1 bis 15, bevorzugt 3 bis 10, besonders bevorzugt 4 bis 8 mg/g. Die Glas-Übergangs-Temperatur der Polyester-Urethan-Harnstoffe **A2** beträgt -20 bis - 60, bevorzugt -30 bis -50 °C. Die Glas-Übergangs-Temperatur der Komponente **A1** liegt dabei stets unter der Glas-Übergangs-Temperatur der Komponente **A2**, bevorzugt ist die Differenz in der Glas-Übergangs-Temperatur mindestens 5, besonders bevorzugt 7 bis 20 K.

Es ist im Rahmen der Erfindung auch möglich, Bindemittel **A** mit Segmenten mit mindestens zwei verschiedenen Glas-Übergangs-Temperaturen und verschiedenartigen funktionellen Gruppen herzustellen, wobei sich die Glas-Übergangs-Temperaturen um jeweils mindestens 5 K unterscheiden. Diese Komponenten **A** mit Blockstruktur können dann beispielsweise sowohl Hydroxyl- als auch Aminogruppen aufweisen.

Das Massenverhältnis der Bindemittelkomponenten **A1** und **A2**, jeweils bezogen auf den Feststoff, beträgt 4 zu 6 bis 9 zu 1, bevorzugt 5 zu 5 bis 8 zu 2, besonders bevorzugt 6 zu 4 bis 7 zu 3.

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die Aminzahl ist gemäß DIN 53 176 definiert als der Quotient derjenigen Masse ***m***_{KOH} an Kaliumhydroxid, die genausoviel Säure zur Neutralisation verbraucht wie eine zu untersuchende Probe, und der Masse ***m***_{B} dieser Probe (Masse des Feststoffes in der Probe bei Lösungen oder Dispersionen); ihre übliche Einheit ist "mg/g".

Die Komponente **A1**, das Hydroxylgruppen-haltige Polyurethan, das im folgenden auch als "Weichkomponente" bezeichnet wird, läßt sich auf bekannte Weise herstellen aus aliphatischen, aromatischen oder gemischt aromatisch-aliphatischen Polyolen mit im Mittel mindestens zwei Hydroxylgruppen pro Molekül und mehrfunktionellen aliphatischen, aromatischen oder gemischt aromatisch-aliphatischen Isocyanaten, wobei in der Mischung der Reaktanden die Stoffmenge der Isocyanatgruppen geringer ist als die der Hydroxylgruppen. Die erforderliche Wasserverdünnbarkeit wird durch Einbau von anionogenen Gruppen erreicht, also von Bausteinen, die Säuregruppen tragen, die vor oder bei der Dispergierung in Wasser durch Zusatz von Neutralisationsmitteln wie wäßrigen Alkalien oder Aminen zumindest teilweise neutralisiert werden und dabei in Anionen überführt werden. Wie bereits erwähnt, sind die Polyurethane **A1** bevorzugt abgeleitet von Polyester-Urethanen, die durch Polyaddition von Hydroxylgruppen-haltigen Polyestern **A11** und mehrfunktionellen Isocyanaten **A12** zugänglich sind. Die Polyester **A11** wiederum werden in bekannter Weise durch Polykondensation von Polyolen **A111** und mehrfunktionellen Säuren **A112** oder deren esterbildenden Derivaten hergestellt, wobei bevorzugt Mischungen von mindestens zwei aliphatischen Polyolen **A111** eingesetzt werden.

Bevorzugt sind die Polyole **A111** aliphatische Dihydroxyverbindungen. Es ist auch möglich, einen Massenanteil von bis zu 20 % an drei- oder höherwertigen Polyolen (mit drei oder mehr Hydroxylgruppen pro Molekül, wie z. B. Trimethyloläthan und - propan, Pentaerythrit und Sorbit) in dieser Mischung einzusetzen. Bevorzugt beträgt dieser Massenanteil bis zu 10 %, besonders bevorzugt bis zu 5 %. Geeignete aliphatische Polyole **A111** sind insbesondere die linearen und verzweigten Dihydroxy-verbindungen mit 2 bis 8 Kohlenstoffatomen wie Glykol, 1,2-und 1,3-Propandiol, 1,4-Butandiol, 1,6-Hexandiol, Neopentylglykol, Diäthylenglykol und Triäthylenglykol. Der Massenanteil an verzweigten Dihydroxyverbindungen soll dabei 5 % nicht übersteigen.

Als Verbindungen **A112** werden bevorzugt aliphatische lineare oder cyclische Carbonsäuren, besonders bevorzugt Dicarbonsäuren, eingesetzt. Geeignet sind beispielsweise lineare aliphatische Dicarbonsäuren mit 2 bis 40 Kohlenstoffatomen, wie Bernsteinsäure, Glutarsäure, Adipinsäure, Pimelinsäure und Korksäure, Azelainund Sebacinsäure, Cyclohexandicarbonsäuren sowie die dimeren Fettsäuren, die aus natürlichen ungesättigten Fettsäuren oder deren Gemischen zugänglich sind. Aromatische Di- und Polycarbonsäuren können in geringem Anteil (Massenanteil in der Säurekomponente bis zu 10 %) zugesetzt werden. Beispiele hierfür sind Phthalsäure, Iso- und Terephthalsäure, Trimellithsäure, Trimesinsäure sowie Benzophenontetracarbonsäure.

Anstelle oder zusätzlich zu den Verbindungen **A111** und **A112** lassen sich auch Hydroxysäuren **A114**, bevorzugt Hydroxycarbonsäuren mit jeweils mindestens einer Hydroxyl- und einer Säure-Gruppe oder deren esterbildenden Derivate einsetzen. Besonders bevorzugt sind dabei Monohydroxymonocarbonsäuren. Geeignete Verbindungen dieser Klasse **A114** sind γ-Hydroxybuttersäure, δ-Hydroxyvaleriansäure, ε-Hydroxycapronsäure, Milchsäure sowie Oligo- und Polyester aus den genannten Säuren, wobei auch Gemische dieser Säuren in den Polyestern vorkommen können. Besonders bevorzugt ist das technisch verfügbare Poly-ε-caprolacton.

Die Synthese der Polyester **A11** erfolgt bevorzugt in zwei Stufen, wobei in der ersten Stufe lediglich difunktionelle Polyole **A111** mit zweibasigen aliphatischen linearen, verzweigten oder cyclischen Carbonsäuren **A112** zu einem linearen Polyester mit einer Hydroxylzahl von 20 bis 100, bevorzugt 30 bis 70, und besonders bevorzugt 40 bis 60 mg/g kondensiert werden. In einer zweiten Stufe wird mit weiteren Polyolen **A111** weiterkondensiert, wobei in dieser Stufe auch höherfunktionelle Polyole eingesetzt werden können. Am Ende dieser zweiten Stufe beträgt die Hydroxylzahl des Polyesters 50 bis 200 mg/g, bevorzugt 60 bis 160, besonders bevorzugt 70 bis 130 mg/g. Der Polyester der zweiten Stufe wird anschließend in der dritten Stufe mit einer Verbindung **A113** mit mindestens zwei Hydroxylgruppen und mindestens einer Säuregruppe sowie gegebenenfalls mit weiterem Polyol **A111** und dem mehrfunktionellen Isocyanat **A12** umgesetzt zu dem Addukt **A1**.

Als Verbindungen **A113** werden bevorzugt aliphatische Dihydroxycarbonsäuren wie Dimethylolpropionsäure und Weinsäure eingesetzt. Es lassen sich auch Säuren mit mindestens zwei Aminogruppen oder mindestens einer Amino- und einer Hydroxylgruppe anwenden, wie z. B. 2,4-Diaminobuttersäure.

Die mehrfunktionellen Isocyanate **A12** können aliphatisch, gemischt aliphatischaromatisch oder aromatisch sein; bevorzugt werden difunktionelle aliphatische lineare, verzweigt und cyclische Isocyanate wie 1,4-Diisocyanatobutan, 1,6-Diisocyanatohexan, 1,5-Diisocyanato-2-methylpentan, 2,2,4- und 2,4,4-Trimethyl-1,6-diisocyanatohexan, 1,12-Diisocyanatododecan, 1,4-Diisocyanatocyclohexan, Isophorondiisocyanat, Bis-(4-isocyanatocyclohexyl)methan sowie die von diesen abgeleiteten Uretdione, Allophanate und Biurete. In geringen Anteil (bis zu 10 % der Masse der Isocyanat-Komponente) können auch drei- oder mehrfunktionelle Isocyanate wie die von den genannten Diisocyanaten abgeleiteten Isocyanurate eingesetzt werden. Weniger bevorzugt ist der Einsatz von aromatischen oder gemischt aromatisch-aliphatischen Isocyanaten wie Tetramethylxylylendiisocyanat, Bis-(4-isocyanatophenyl)-methan, Toluylendiisocyanat und 1,5-Diisocyanatonaphthalin.

Die Säuregruppen dieses Polyesterurethans werden durch Zugabe von Alkalien oder Aminen, bevorzugt eines tertiären Amins, neutralisiert, das neutralisierte Addukt **A1** läßt sich anschließend in Wasser dispergieren, wobei ein Festkörper-Massenanteil von 30 bis 70 %, bevorzugt von 45 bis 65 % eingestellt wird. Die Synthese des Polyesters sowie die anschließenden Umsetzungen erfolgen bevorzugt in Abwesenheit von organischen Lösungsmitteln.

Die Komponente **A2**, ein Polyurethan-Harnstoff, im folgenden auch als "elastische Komponente" bezeichnet, wird vorzugsweise in drei Schritten synthetisiert, wobei in der ersten Stufe aus aliphatischen Polyolen **A211** und mehrfunktionellen Carbonsäuren **A212** durch Veresterung unter Wasserabspaltung in Substanz oder Schmelze zunächst ein Polyester **A21** mit einer Hydroxylzahl von 10 bis 90, bevorzugt 30 bis 70, besonders bevorzugt 40 bis 60 mg/g hergestellt wird, der anschließend gegebenenfalls in Gegenwart von geringen Mengen eines inerten Lösungsmittels wie beispielsweise N-Methylpyrrolidon mit einer Verbindung **A213** mit mindestens zwei Hydroxylgruppen und mindestens einer Säuregruppe sowie gegebenenfalls mit weiterem Polyol **A211** und einem stöchiometrischen Überschuß eines mehrfunktionellen Isocyanats **A22** umgesetzt zu dem Isocyanatgruppen-haltigen Addukt **A23**, das mit einem tertiären Amin **A24** neutralisiert und in Wasser dispergiert wird, und danach durch Zugabe eines Polyamins, bevorzugt eines Diamins A25 zum Polyurethan-Harnstoff kettenverlängert wird. Dabei wird die Konzentration so gewählt, daß ein Festkörper-Massenanteil von 20 bis 60 %, bevorzugt 25 bis 50 %, besonders bevorzugt 32 bis 40 % erreicht wird.

Als Polymer-Polyol **A211** kann auch Poly-propylen-glykol, Poly-tetrahydrofuran-diol oder Polybutadiendiol verwendet werden. In frage kommen dabei z.B. Polypropylenglykol 1010 oder 2020 oder Polybutadiendiol PolyBD R-45 HT, PolyBD R-20LM (®Elf Atochem), Polyisoprendiol wie PolyIp (®Elf Atochem) oder auch die perhydrierten Varianten davon wie Polytail-H oder EPOL (beides ®Elf Atochem).

Dabei werden ansonsten die Polyole **A211**, die mehrfunktionellen Carbonsäuren **A212**, die Verbindungen **A213** und die Isocyanate **A22** aus denselben Listen ausgewählt wie die entsprechenden Verbindungen **A111, A112, A 113** und **A12**. Als tertiäre Amine werden vorzugsweise solche eingesetzt, die keine weiteren funktionellen Gruppen aufweisen. Beispiele für geeignete Amine **A24** sind Triäthylamin, Tri-n-, und -isopropylamin, Tri- n- und -isobutylamin, Trioctylamin und Tridodecylamin.

Die zur Kettenverlängerung eingesetzten Amine **A25** haben mindestens zwei primäre, jeweils mindestens eine primäre und sekundäre oder mindestens zwei sekundäre Aminogruppen, wobei Amine mit mindestens zwei primären Amingruppen bevorzugt werden. Bevorzugt sind die Aminogruppen an ein aliphatisches Kohlenstoffatom gebunden. Geeignete Amine sind insbesondere aliphatische primäre Diamine wie Äthylendiamin, Polyoxyalkylen- oder Polyiminoalkylendiamine, deren Alkylengruppen bevorzugt 2 bis 4 Kohlenstoffatome aufweisen, wie Diäthylentriamin, Triäthylentetramin, 1,2-und 1,3-Diaminopropan, 1,4-Diaminobutan, 1,2-und 1,4-Diaminocyclohexan, 2,4,4- und 2,2,4- Trimethylhexandiamin, Isophorondiamin und Tetramethylxylylendiamin.

Aus den Komponente **A1** und **A2** wird unter Zusatz von geeigneten Vernetzern **B** der erfindungsgemäße Soft-Feel-Lack hergestellt.

Als Vernetzer **B** eignen sich alle niedermolekularen Verbindungen, die mit Hydroxyl-, Amino- oder Carboxyl-Gruppen unter Addition oder unter Kondensation mit Bildung einer chemischen Bindung zwischen den Resten des Bindemittels und des Vernetzers sowie eines flüchtigen Kondensats reagieren. Im Falle von Hydroxyl- und Aminogruppen eignen sich insbesondere mehrfunktionelle Isocyanate, besonders solche, die durch Einbau von anionischen oder nichtionischen hydrophilen Gruppen wasserverdünnbar sind, oder bei höheren Temperaturen reaktive Vernetzer wie Säureanhydride, Aminoplastharze, blockierte Isocyanate und ähnliche Verbindungen. Im Falle von Carboxylgruppen als funktionellen Gruppen werden bevorzugt Vernetzer mit Epoxidgruppen oder Aziridingruppen eingesetzt. Bevorzugt sind für Hydroxylund Aminogruppen-haltige Komponenten **A** als Härter **B** unblockierte mehrfunktionelle, insbesondere hydrophil modifizierte Isocyanate. Soweit die Bindemittelkomponente **A1** und **A2** keine oder nur geringe Mengen an aromatischen Bausteinen enthalten, werden aromatische Isocyanate bevorzugt. Es können auch Mischungen von aromatischen und aliphatischen Isocyanaten eingesetzt werden. Unter den mehrfunktionellen Isocyanaten, die für die Erfindung geeignet sind, sind besonders auch gemischte Isocyanurate von aliphatischen und aromatischen Diisocyanaten hervorzuheben, beispielsweise solche, die durch gemeinsame Umsetzung von aromatischen Diisocyanaten wie TDI (Toluylendiisocyanat) oder MDI (Bis(4-isocyanatophenyl)methan) mit aliphatischen Diisocyanaten wie HMDI (Hexamethylendiisocyanat, 1,6-Diisocyanatohexan), Tetramethylxylylendiisocyanat (TMXDI) oder IPDI (Isophorondiisocyanat) zugänglich sind. Diese Isocyanate können anschließend auf bekannte Weise durch Umsetzen mit anionogenen Verbindungen wie beispielsweise Dimethylolpropionsäure oder anderen Verbindungen gemäß **A113** oder mit nichtionischen hydrophilen Verbindungen wie Polyoxyäthylenglykol hydrophil modifiziert werden.

Die Soft-Feel-Lacke lassen sich aus den Bindemitteln **A** und dem Härter **B** bevorzugt so herstellen, daß Pigmente und gegebenenfalls Mattierungsmittel in der Komponente **A** fein verteilt werden, diese Mischung dann gegebenenfalls mit einem Verdicker sowie weiteren üblichen Zusätzen zu einem applikationsfertigen Lack formuliert wird. Besonders bevorzugt lassen sich bei dieser Formulierung noch weitere Mengen der Bindemittelkomponenten **A1** oder **A2** gemeinsam mit dem Verdicker zusetzen. Eine weitere bevorzugte Ausführungsform besteht darin, in einer der Bindemittelkomponenten **A1** und **A2** das Pigment, und in der anderen das Mattierungsmittel aufzuschließen (wobei die erforderliche feine Verteilung im Bindemittel realisiert wird). Es hat sich als günstig herausgestellt, wenn die Pigment-Komponente in der weichen Komponente **A1** und das Mattierungsmittel in der elastischen Komponente **A2** aufgeschlossen wird. Die weiteren Zusätze, wie Netz- und Verlaufsmittel, Dispergiermittel und Entschäumer werden jeweils mindestens einer der Komponente **A1** und **A2** zugesetzt. Der Festkörper-Massenanteil des fertigen, mit Härter versetzten Lackes beträgt 35 bis 65 %, bevorzugt 40 bis 60, und besonders bevorzugt 45 bis 57 %. Der Massenanteil an Lösungsmittel im fertigen Lack liegt typisch unter 6, bevorzugt unter 4 %.

Zur Modifizierung der Oberflächeneigenschaften, insbesondere des sog. Griffs (Haptik) können den erfindungsgemäß hergestellten Lacken auch Wachse zugesetzt werden, wodurch beispielsweise die Kratzfestigkeit der Beschichtung noch erhöht werden kann.

Wie bereits eingangs erwähnt, lassen sich mit den durch die Erfindung zugänglichen Lacken Beschichtungen auf harten Substraten aller Art herstellen, die sich oberflächlich weich anfühlen und beispielsweise zu rutschfesten Beschichtungen führen. Insbesondere eignen sich diese Lacke zur Beschichtung von Kunststoffen, Metallen, keramischen Materialien und Glas.

Die Erfindung wird durch die nachfolgenden Beispiele erläutert. Dabei werden zusätzlich die folgenden Definitionen benutzt:

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Alle Angaben von Zahlen mit der Einheit "%", soweit nicht ausdrücklich anders vermerkt, sind Werte für Massenanteile (g/ 100 g).

### Beispiel 1 Herstellung eines "weichen" Polyester-Urethans A1

### 1.1 Polyester

Eine Mischung von 32,2 kg Diäthylenglykol und 16,42 kg Äthylenglykol wurde mit 72 kg Adipinsäure unter Zusatz von 330 g Dibutylzinndilaurat auf 150 °C erhitzt. Das entstehende Wasser wurde durch Zusatz von Xylol ausgekreist, wobei im Verlauf von drei Stunden die Temperatur bis auf 220 °C gesteigert wurde. Die Mischung wurde bei dieser Temperatur gehalten, bis eine Säurezahl von unter 3 mg/g erreicht war. Die Hydroxylzahl des erhaltenen Polyesters betrug 50 mg/g, bei 23 °C und einem Schergefälle von 25 s⁻¹ wurde eine Viskosität von 10 Pa·s gemessen.

### 1.2 Polyesterurethan

2064 g des erhaltenen Polyesters wurden mit 22 g 1,6-Hexandiol, 36,5 g N-Methylpyrrolidon und 150 g Dimethylolpropionsäure auf 130 °C erhitzt, anschließend wurden 273 g 1,6-Diisocyanatohexan während 20 Minuten zugefügt und diese Temperatur noch 1 Stunde gehalten. Nach Abkühlen auf 80 °C wurde durch Zugabe von 66 g Triäthylamin neutralisiert und in 1950 g Wasser dispergiert zu einer feinteiligen Dispersion mit einem Festkörper-Massenanteil von 55 %. Diese Dispersion hatte eine Viskosität von 1000 mPa·s bei 23 °C und einem Schergefälle von 25 s⁻¹. Die Hydroxylzahl betrug 27 mg/g, die Säurezahl 28 mg/g (jeweils bezogen auf den Feststoff der Dispersion).

### Beispiel 2 Herstellung eines "weichen" Polyester-Urethans A1

9,8 kg des Polyesters aus Beispiel 1.1 wurden mit 345 g Trimethylolpropan, 25 g Äthylenglykol, 109 g 1,6-Hexandiol und 741 g Dimethylolpropionsäure gemischt und auf 130 °C erwärmt. Nach Erreichen dieser Temperatur wurden 1730 g 1,6-Diisocyanatohexan während 20 Minuten zugefügt und diese Temperatur noch 1 Stunde gehalten. Nach Abkühlen auf 80 °C wurde durch Zugabe von 290 g Dimethyläthanolamin neutralisiert und in 10 kg Wasser dispergiert zu einer feinteiligen Dispersion mit einem Festkörper-Massenanteil von 55 %. Diese Dispersion hatte eine Viskosität von 1000 mPa·s bei 23 °C und einem Schergefälle von 25 s⁻¹. Die Hydroxylzahl betrug 40 mg/g, die Säurezahl 27 mg/g (jeweils bezogen auf den Feststoff der Dispersion).

### Beispiel 3 Herstellung eines "elastischen" Polyester-Urethan-Harnstoffes A2

### 3.1 Polyester

Aus einer Mischung von 48,2 kg 1,6-Hexandiol, 34,15 kg Adipinsäure und 18,53 kg Isophthalsäure wurde mit Zusatz von 20 g Dibutylzinnoxid bei einer Temperatur, die während 3 Stunden von 150 auf 220 °C gesteigert wurde, unter Entfernung des Reaktionswassers ein Polyester mit einer Säurezahl von unter 3 mg/g und einer Hydroxylzahl von 80 mg/g hergestellt.

### 3.2 Polyesterurethanharnstoff

2065 g dieses Polyesters wurden zusammen mit 37 g 1,6-Hexandiol und 112 g Dimethylolpropionsäure bei 50 °C in 1200 g N-Methylpyrrolidon gelöst. Zu der klaren Lösung wurden 540 g 1,6-Diisocyanatohexan zugefügt, die Mischung wurde bis zu einem Massenanteil an Isocyanatgruppen von unter 0,9 % reagieren gelassen. Danach wurden 55 g Triäthylamin zugesetzt, die Mischung wurde in 3300 g Wasser dispergiert. Zu dieser Dispersion wurde eine Lösung von 66 g Isophorondiamin in 700 g Wasser unter guter Rührung zugefügt. Man erhielt eine feinteilige Dispersion mit einem Festkörper-Massenanteil von 35 % und einer Viskosität von 300 mPa·s (23 °C, 25 s⁻¹). Die Hydroxylzahl war innerhalb der Meßgenauigkeit 0, die Aminzahl betrug 5 mg/g. Der Lösungsmittelgehalt der Dispersion war 15 %.

### Beispiel 4 Herstellung eines "Soft-Feel"-Lackes

### 4.1 mit aromatischer Struktur im Bindemittel

17,8 g der Dispersion aus Beispiel 2 wurden mit 0,3 g eines Netzmittels (®Additol XL 250 der Vianova Resins GmbH) und 0,5 g eines Dispergiermittels (®Additol VXW 6208) sowie 1,5 g eines Rußpigments (Spezialschwarz 4 der Degussa GmbH) versetzt und in einer Perlmühle homogenisiert.

22,5 g der Dispersion aus Beispiel 3 wurden mit 18,5 g Wasser verdünnt, dazu wurden 0,3 g eines Entschäumers (®Additol XW 375), und jeweils 3,75 g eines Mattierungsmittels (OK 412 der Degussa GmbH und ®Pergopak M4 des Martinswerk) gegeben und die Mischung in einem Dissolver 30 Minuten homogenisiert.

Beide Mischungen wurden zusammengefügt und gemeinsam mit einer Mischung von weiteren 30 g der Dispersion aus Beispiel 2, 0,3 g eines Benetzungsmittels (®Byk 346 der Byk GmbH) und 0,5 g eines Verdickers (®Viscalex HV 30 der Allied Colloids) homogenisiert. Zu dieser fertigen Bindemittelmischung (100 g) wurden 10 g eines hydrophil modifizierten Isocyanats auf Basis von 1,6-Diisocyanatohexan mit einem Isocyanat-Massenanteil von 17 % (®Bayhydur 3100 der Bayer AG) gegeben, die Mischung wurde durch Zusatz von weiterem Wasser auf eine Auslaufzeit (DIN-EN-ISO-Becher mit 4 mm Düse bei 23 °C) von 180 Sekunden eingestellt. Der Festkörper-Massenanteil in dem Lack betrug 53 %. Nach einer Lagerzeit von 120 Minuten bei Raumtemperatur mußte der Rest des Lackes verworfen werden (Ablauf der sog. "Topfzeit"). Es ließ sich kein Anstieg der Viskosität beobachten.

### 4.2.1 rein aliphatisches System

62 g der Dispersion aus Beispiel 2 wurden mit 0,3 g eines Netzmittels (Additol XL 250) und 0,5 g eines Dispergiermittels (Additol VXW 6208) sowie 1,5 g eines Rußpigments (Spezialschwarz 4) versetzt und in einer Perlmühle homogenisiert. Zu diesem Vorlack wurde 18,5 g Wasser, 0,3 g eines Entschäumers (Additol XW 375) und jeweils 3,75 g eines Mattierungsmittels (OK 412 und Pergopak M4) gegeben und 30 Minuten unter einem Dissolver verrührt. Zum Schluß wurden 0,3 g eines Benetzungsmittels (Byk 346) und 0,5 g eines Verdickers (Viscalex HV 30) zugegeben. Diese Mischung wurde mit Wasser auf eine Auslaufzeit (DIN-EN-ISO Becher mit 4 mm Düse bei 23 °C) von 180 s eingestellt. Zu diesem Lack wurden 10 g des Härters (Bayhydur 3100) gegeben und eingerührt.

### 4.2.2 rein aliphatisches System

Es wurde die gleiche Formulierung wie in 4.2.1 verwendet, aber statt der Dispersion aus Beispiel 2 wurde die aus Beispiel 1 verwendet.

### 4.3 aliphatisches Bindemittel- und aromatisches Härtersystem

Der Lack wurde wie in Beispiel 4.2.1 hergestellt, aber statt eines aliphatischen Härters (Bayhydur 3100) wurde 17 g eines aromatischen Härters (®Cythane 3174 der Cytec) gelöst in 20 g N-Methylpyrrolidon zum Vorlack gegeben und unter dem Dissolver eingerührt. Die Viskosität wurde ebenfalls mit Wasser auf 180 s Auslaufzeit eingestellt.

Mit diesen Lacken (Beispiel 4.1 bis 4.3) wurden Substrate aus Kunststoff (ABS, PMMA, Polystyrol, Polycarbonat, beflammtes Polypropylen, Hart-PVC, PA 66), unbehandeltem Stahl und Stahlplatten, die mit einer üblichen Grundierung versehen waren, beschichtet. Nach ca. 5 Minuten Ablüften wurden die Platten 30 Minuten bei 80 °C getrocknet. Die Trockenfilm-Schichtstärke war 30 bis 35 µm.

Die Chemikalienbeständigkeit wurde an den beschichteten Stahlplatten beurteilt. Bei 1000 Doppelhüben mit einem sog. Crockmeter wurden im Kontakt mit Wasser, Xylol, Aceton und verdünntem Ammoniak kein bzw. geringer (Xylol) Angriff festgestellt.

Die Beständigkeit gegen UV-Bestrahlung wurde mit Hilfe einer handelsüblichen Bestrahlungsapparatur gemessen. Während sich bei dem rein aliphatischen "Soft-Feel"-System (Beispiele 4.2.1 und 4.2.2) schon innerhalb von 24 bis 48 Stunden die Oberfläche verändert und die Beschichtung klebrig und schmierig wird, zeigten die erfindungsgemäßen Lacke (Beispiel 4.1 und 4.3) auch nach über 700 Stunden Bestrahlung keine Veränderung.

## Patentansprüche

1. Soft-Feel-Lacke enthaltend wasserverdünnbare Bindemittel **A,** die funktionelle Gruppen ausgewählt aus Hydroxylgruppen, Aminogruppen und Carboxylgruppen aufweisen, und Härter **B,** deren funktionelle Gruppen mit den funktionellen Gruppen der Komponente **A** reagieren können unter Ausbildung von chemischen Bindungen als Vernetzungsstellen, wobei die Bindemittel **A** Kombinationen sind aus Hydroxylgruppen-haltigen Polyurethanen **A1** und Aminogruppen-haltigen Polyurethan-Harnstoffen **A2,** und mindestens eine der Komponenten **A** und **B** aromatische Bestandteile in einer solchen Menge enthält, daß der Massenanteil an aromatischen Strukturbausteinen in der Kombination aus Bindemittel und Härter, bezogen auf den Feststoff, mindestens 3 % beträgt.

2. Soft-Feel-Lacke nach Anspruch 1, **dadurch gekennzeichnet, daß** die Bindemittel **A** eine Mischung sind aus einem Hydroxylgruppen-haltigen Polyester-Urethan **A1** und einem Aminogruppen-haltigen Polyester-Urethan-Harnstoff **A2.**

3. Soft-Feel-Lacke nach Anspruch 1, **dadurch gekennzeichnet, daß** der Härter **B** ein unblockiertes, gegebenenfalls hydrophil modifiziertes Isocyanat ist mit mindestens zwei Isocyanatgruppen pro Molekül.

4. Soft Feel-Lacke nach Anspruch 1, **dadurch gekennzeichnet, daß** das Hydroxylgruppen-haltige Polyurethan **A1** eine Hydroxylzahl von 10 bis 60 mg/g und eine Glas-Übergangs-Temperatur von -70 bis -30 °C aufweist.

5. Soft-Feel-Lacke nach Anspruch 1, **dadurch gekennzeichnet, daß** die Hydroxylzahl der Polyurethan-Harnstoffe **A2** 0 bis 10 mg/g und ihre Aminzahl 1 bis 15 mg/g beträgt, und ihre Glas-Übergangs-Temperatur -20 bis - 60°C ist.

6. Soft-Feel-Lacke nach Anspruch 1, **dadurch gekennzeichnet, daß** die Glas-Übergangs-Temperatur der Komponente **A1** dabei mindestens 5 K unter der Glas-Übergangs-Temperatur der Komponente **A2** liegt.

7. Soft-Feel-Lacke nach Anspruch 1, **dadurch gekennzeichnet, daß** das Masseaverhältnis der Bindemittelkomponenten **A1** und **A2,** jeweils bezogen auf den Feststoff, 4 zu 6 bis 9 zu 1 beträgt.

8. Verwendung der Soft-Feel-Lacke nach Anspruch 1 zur Herstellung von Beschichtungen auf harten Substraten ausgewählt aus Kunststoffen, Metallen, Keramik und Glas.

9. Beschichtungen mit "Soft-Feel"-Charakteristik, herstellbar durch Auftragen eines Lackes nach Anspruch 1.

## Claims

1. Soft feel coating materials comprising water dilutable binders **A** which possess functional groups selected from hydroxyl, amino and carboxyl groups, and curing agents **B** which have functional groups capable of reacting with the functional groups of the component **A,** and forming chemical bonds as cross-linking sites, wherein the binders **A** are combinations of polyurethanes **A1** containing hydroxyl groups and polyurethane ureas **A2** containing amino groups, and at least one of the components **A** and **B** comprises a quantity of aromatic constituent units such that the mass fraction of the aromatic constituent units, in relation to the solid matter in the combination of binder and curing agent, is at least 3 %.

2. Soft feel coating materials according to claim 1, wherein the binders **A** are a mixture of a polyester urethane **A1** containing hydroxyl groups and a polyester urethane urea **A2** containing amino groups.

3. Soft feel coating materials according to claim 1, wherein the curing agent **B** is an unblocked, optionally hydrophilically modified, isocyanate with at least two isocyanate groups per molecule.

4. Soft feel coating materials according to claim 1, wherein the polyurethane **A1** containing hydroxyl groups possesses a hydroxyl number from 10 to 60 mg/g and a glass transition temperature of - 70 to - 30 °C.

5. Soft feel coating materials according to claim 1, wherein the polyurethane ureas **A2** possess a hydroxyl number of from 0 to 10 mg/g, an amine number of 1 to 15 mg/g and a glass transition temperature of - 20 to - 60 °C.

6. Soft feel coating materials according to claim 1, wherein the glass transition temperature of the component **A1** is at least 5 K below the glass transition temperature of the component **A2.**

7. Soft feel coating materials according to claim 1, wherein the mass ratio of the binder components **A1** and **A2,** in relation to the solid matter, each is from 4 : 6 to 9 : 1.

8. The use of the soft feel coating materials according to claim 1 for producing coatings on hard substrates selected from plastics, metals, ceramic materials and glass.

9. Coatings with soft feel characteristics, producible by application of a coating material according to claim 1.

## Revendications

1. Vernis Soft-Feel (à toucher doux) contenant des liants **A** diluables à l'eau, qui comprennent des groupes fonctionnels choisis parmi les groupes hydroxyle, les groupes amino et les groupes carboxyle, et des durcisseurs **B** dont les groupes fonctionnels peuvent réagir avec les groupes fonctionnels du composant **A** avec formation de liaisons chimiques en tant que points de réticulation, **caractérisés en ce que** les liants **A** sont des combinaisons de polyuréthannes **A1** contenant des groupes hydroxyle et de polyuréthanne-urées **A2** contenant des groupes amino, et au moins un des composants **A** et **B** contenant des constituants aromatiques en une quantité telle que la proportion en masse des composants structuraux aromatiques dans la combinaison du liant et du durcisseur soit d'au moins 3 % par rapport à l'extrait sec.

2. Vernis Soft-Feel selon la revendication 1, **caractérisés en ce que** les liants **A** sont un mélange d'un polyester-uréthanne **A1** contenant des groupes hydroxyle et d'une polyester-uréthanne-urée **A2** contenant des groupes amino.

3. Vernis Soft-Feel selon la revendication 1, **caractérisés en ce que** le durcisseur **B** est un isocyanate non bloqué, ayant éventuellement subi une modification hydrophile, comportant au moins deux groupes isocyanate par molécule.

4. Vernis Soft-Feel selon la revendication 1, **caractérisés en ce que** le polyuréthanne **A1** contenant des groupes hydroxyle présente un indice d'hydroxyle de 10 à 60 mg/g et une température de transition vitreuse de -70 à - 30 °C.

5. Vernis Soft-Feel selon la revendication **1, caractérisés en ce que** l'indice d'hydroxyle des polyuréthanne-urées **A2** est de 0 à 10 mg/g, et leur indice d'amine est de 1 à 15 mg/g, et leur température de transition vitreuse est de - 20 à - 60 °C.

6. Vernis Soft-Feel selon la revendication 1, **caractérisés en ce que** la température de transition vitreuse du composant **A1** est alors d'au moins 5 K inférieure à la température de transition vitreuse du composant **A2.**

7. Vernis Soft-Feel selon la revendication 1, **caractérisés en ce que** le rapport en masse des composants liants **A1** et **A2** est compris entre 4 : 6 et 9 : 1, dans chaque cas par rapport à l'extrait sec.

8. Utilisation des vernis Soft-Feel selon la revendication 1 pour réaliser des revêtements sur des substrats durs choisis parmi les matériaux plastiques, les métaux, la céramique et le verre.

9. Revêtements ayant des caractéristiques "Soft Feel", pouvant être réalisés par application d'un vernis selon la revendication 1.
